(19)

**Europäisches Patentamt**
**European Patent Office**
**Office européen des brevets**

(11) **EP 4 773 103 A1**

(12) **EUROPEAN PATENT APPLICATION**

(43) Date of publication:
08.07.2026 Bulletin 2026/28

(21) Application number: 25203032.5

(22) Date of filing: 18.09.2025

(51) International Patent Classification (IPC):
*G06V 20/52* (2022.01)    *G06V 40/18* (2022.01)

(52) Cooperative Patent Classification (CPC):
G06V 20/52; G06V 40/18

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 07.01.2025 IN 202521001445

(71) Applicant: **Tata Consultancy Services Limited Maharashtra (IN)**

(72) Inventors:
• **THOTTATHIL UNNIKRISHNAN, Bharath**
**695581 Trivandrum, Kerala (IN)**
• **ABDULLA, Suhail**
**695581 Trivandrum, Kerala (IN)**
• **ANTONY, Grigary Cheeran**
**695581 Trivandrum, Kerala (IN)**
• **KUPPUSAMY SANTHANAM, Sivakumar**
**600086 Chennai, Tamil Nadu (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR MEASURING SOCIAL AWARENESS OF CROWD BASED ON IGNORANCE INDEX**

(57) This disclosure relates generally to a method and system for measuring social awareness of crowd based on ignorance index. Conventional methods for measuring social awareness through social experimentation are conducted by collecting data manually. This manual approach takes more time and incurs more money. The disclosed method counts the number of people using object detection techniques whenever preferred action towards sustainability is performed by people. The disclosure uses camera-based computer vision techniques to identify the objects in the scene and detect sustainable activity. Further the number of subjects is counted who care about sustainability and who do not perform sustainable actions. Then an ignorance index is calculated from the number of subjects who gazed at the device but have not performed any sustainable action. The disclosed method is used for social awareness measuring through social experimentation to understand the human behavior in the social gathering.

FIG. 3

EP 4 773 103 A1

## Description

CROSS-REFERENCE TO RELATED APPLICATIONS AND PRIORITY

The present application claims priority to Indian application no. 202521001445, filed on January 7, 2025.

TECHNICAL FIELD

The disclosure herein generally relates to social awareness measurement based on object detection and tracking, and, more particularly, to a method and system for measuring social awareness of crowd based on ignorance index.

BACKGROUND

Social experiments help to understand human behavior in social settings. Social experiments provide actual data about the behavior than presumption of human behavior. These experiments help organizations like governments and other non-profit institutions. These experiments depict the real behavior as these experiments are conducted in a closed secretive manner. A social experiment is a method of psychological or sociological research that observes people's reactions to certain situations or events. For making long-term plans like 5-year plans, country needs to understand social behavior of the citizens. Conducting social experimentation is one effective method to understand this need. Typically, social experimentation is conducted in manual mode. That is by arranging social experimentation setup and collecting the data using manual workforce. This manual approach takes more time and also incurs huge amounts of money. Conducting more experiments will lead to a more realistic understanding of social behavior. So, in order to conduct more experiments, it takes longer time and more money.

SUMMARY

Embodiments of the present disclosure present technological improvements as solutions to one or more of the above-mentioned technical problems recognized by the inventors in conventional systems. For example, in one embodiment, a method for measuring social awareness of crowd based on ignorance index is provided. The method includes determining the presence of a subject by processing a plurality of frames of a real time video captured via an image capturing device based on an object detection algorithm and a centroid tracking algorithm. Further the method includes, identifying the subject to be an ignorant subject towards sustainability actions if (i) an eye gaze angle calculated for the subject lies within a predefined angle range, and (ii) a flowrate of liquid flowing through a tap set up is non zero. The process of identifying the subject to be ignorant is performed for a predefined time interval to determine a count of ignorant subjects within the predefined time interval. Further the method includes, calculating an ignorance index for the pre-defined time interval based on an ignorance model, wherein the model is based on a plurality of parameters comprising the count of ignorant subjects, a volume of the liquid flowing during the pre-defined time interval and a pre-defined beta coefficient for normalizing the ignorance index. And finally, the method includes updating a set of parameters corresponding to a set of components connected to the device based on the ignorance index. The set of parameters is an indication of social awareness in subjects.

In another aspect, a system for measuring social awareness based on ignorance index is provided. The system comprises memory storing instructions; one or more communication interfaces; and one or more hardware processors coupled to the memory via the one or more communication interfaces, wherein the one or more hardware processors are configured by the instructions to determine presence of a subject by processing a plurality of frames of a real time video captured via an image capturing device based on an object detection algorithm and a centroid tracking algorithm. Further the system includes, identifying the subject to be an ignorant subject towards sustainability actions if (i) an eye gaze angle calculated for the subject lies within a predefined angle range, and (ii) a flowrate of liquid flowing through a tap set up is non zero. The process of identifying the subject to be an ignorant is performed for a predefined time interval to determine a count of ignorant subjects within the predefined time interval. Further the system includes, calculating an ignorance index for the pre-defined time interval based on an ignorance model, wherein the model is based on a plurality of parameters comprising the count of ignorant subjects, a volume of the liquid flowing during the pre-defined time interval and a pre-defined beta coefficient for normalizing the ignorance index. And finally, the system includes updating a set of parameters corresponding to a set of components connected to the device based on the ignorance index. The set of parameters is an indication of social awareness in subjects.

The step for calculating the eye gaze angle of a subject comprises, initially generating the set of pose points comprising a set of eye pose points, and a neck pose point of the subject using the pose detection algorithm. Further the eye gaze angle is calculated based on the neck pose point and the set of eye pose points. The eye gaze angle is the angle obtained by connecting the set of eye pose points to the neck pose point. The ignorance index is in the range of a value of zero and a value of one. A lower ignorance index indicates a higher ignorance of social awareness, and a higher ignorance index indicates a lower ignorance of social awareness. The ignorance model is mathematically represented as,

$$II = \sigma\left(\frac{F(t) \times N(t)}{T}\right) \pm \beta$$

where II is the ignorance index, F(t) is the volume of the liquid flowing during the pre-defined time interval. N(t) is the count of the ignorant subjects for the pre-defined time interval, T is the total time and $\beta$ is the pre-defined beta coefficient.

The set of components connected to the device are a display monitor, a speaker, and a pump. The set of parameters (i) LED light intensity in the display monitor are controlled by an LED intensity controller, (ii) volume of the speaker is controlled by a speaker volume controller, and (iii) speed of the pump is controlled by a pump speed controller. The LED light intensity is updated inversely proportional to the ignorance index. The volume of the speaker is updated inversely proportional to the ignorance index. The speed of the pump is updated proportionally to the ignorance index.

In yet another aspect, there is provided a computer program product comprising a non-transitory computer readable medium having a computer readable program embodied therein, wherein the computer readable program, when executed on a computing device causes the computing device for measuring social awareness based on ignorance index by determining presence of a subject by processing a plurality of frames of a real time video captured via an image capturing device based on an object detection algorithm and a centroid tracking algorithm. Further the computer readable program includes, identifying the subject to be an ignorant subject towards sustainability actions if (i) an eye gaze angle calculated for the subject lies within a predefined angle range, and (ii) a flowrate of liquid flowing through a tap set up is non zero. The process of identifying the subject to be an ignorant is performed for a predefined time interval to determine a count of ignorant subjects within the predefined time interval. Further the computer readable program includes, calculating an ignorance index for the pre-defined time interval based on an ignorance model, wherein the model is based on a plurality of parameters comprising the count of ignorant subjects, a volume of the liquid flowing during the pre-defined time interval and a pre-defined beta coefficient for normalizing the ignorance index. And finally, the computer readable program includes updating a set of parameters corresponding to a set of components connected to the device based on the ignorance index. The set of parameters is an indication of social awareness in subjects.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system for measuring social awareness of crowd based on ignorance index according to some embodiments of the present disclosure.
FIG. 2 illustrates a device capturing sustainable actions of subjects connected to the system for measuring social awareness of crowd based on ignorance index according to some embodiments of the present disclosure.
FIG.3 is an exemplary flow diagram illustrating a method for measuring social awareness of crowd based on ignorance index in accordance with some embodiments of the present disclosure.
FIG. 4 illustrates an eye gaze angle of a subject in accordance with some embodiments of the present disclosure.
FIG.5 is an example image of the device capturing sustainable actions of subjects connected to the system for measuring social awareness based on ignorance index according to some embodiments of the present disclosure.
FIG. 6 is an example image of a message displayed in the display monitor according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Embodiments herein provide a system and a method assisted by a device to capture the subject actions and analyze the action to identify subjects showing concern and subject showing ignorance towards sustainable earth goals and objective. The system is connected to the device which includes a camera covering a scene of interest, wherein the scene includes set ups or social gathering events that need a response in context of sustainable earth objective. The system acquires via the camera set up on the device a real time video of a subject's response to the set ups. The method disclosed analyzes the captured image from the camera to classify the response into ignorant or non-ignorant response towards sustainability. The device set up includes an open tap with liquid flowing at a predefined flow rate. Any subject passing by the device is monitored via the camera connected to the device, positioned appropriately to capture activity of the subject around the flowing tap. An eye gaze angle of each subject captured in the camera is determined by processing the video captured by the camera. The determined eye gaze angle if lies within a predefined angle range enables detecting whether the subject has noticed and flowing tap. The device is also mounted with a flowrate sensor to continuously record the flow rate, wherein flow rate above a predefined threshold indicates an open tap. The system disclosed processes a plurality of frames within the captured video withing a time window and simultaneously maps to the recorded flow rate in the same window. Thus, based on the flow rate and eye gaze angle of the detected subject, the method identifies a subject at ignorant or non-ignorant towards water sustainability goal. This process continues for a predefined time interval monitoring a plurality of subjects and updates the count of subjects who gaze at the device but do not close a running tap. Using this count the method disclosed a unique ignorance model to calculate an ignorance index for a particular time interval indicating social awareness of subjects gathered in the social gathering. A display monitor, and a pump connected to the device are used for setting real time feedback such as print appreciation certificates instantly and recycling the water flowing in the tap, in accordance with the classified ignorant or non-ignorant response of the subject. The disclosed method analyzes the gaze of the person to understand if the person has noticed the device with the running tap. The method further analyzes whether the person has ignored the running tap or has decided to close the tap. The already available social awareness experimental devices in art consider only human patterns for analyzing social awareness of humans. The prior methods detect only if a subject is nearby or away from the device, using a proximity sensor. The prior method does not consider if the subject far away noticed the device or must have counted the subject closer who may have not noticed the device because the proximity sensor does not accurately do the analysis. Whereas the method disclosed by checking the gaze angle accurately analyzes the subjects who noticed the device and those who chose to ignore it. However, the disclosed method provides a precise measurement of social awareness using gaze detection. Also, the current available methods do not calculate ignorance index of the group of people attending the social gathering, wherein the ignorance index indicates a level of social awareness of the group of people.

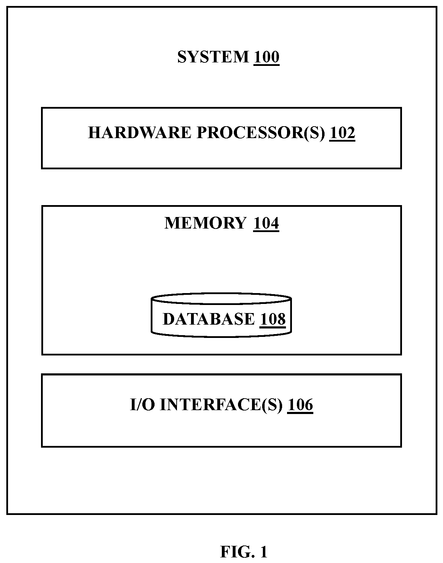

Referring now to the drawings, and more particularly to FIG. 1 through FIG. 6, where similar reference characters denote corresponding features consistently throughout the figures, there are shown preferred embodiments and these embodiments are described in the context of the following exemplary system and/or method.

FIG. 1 illustrates an exemplary block diagram of a system for measuring social awareness of crowd based on ignorance index according to some embodiments of the present disclosure. In an embodiment, the system 100 includes one or more hardware processors 102, communication interface(s) or input/output (I/O) interface(s) 106, and one or more data storage devices or memory 104 operatively coupled to the one or more processors 102. The one or more hardware processors 102 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, the system 100 can be implemented in a variety of computing systems, such as laptop computers, notebooks, hand-held devices, workstations, mainframe computers, servers, a network cloud and the like.

The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) can include one or more ports for connecting a number of devices to one another or to another server. The I/O interface facilities interfacing the device to the system.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

In an embodiment, the memory 104 includes a plurality of modules, such as data collection module, ignorant subject count detection module, ignorance index calculator module (not shown), and the like. Further, the plurality of modules includes programs or coded instructions that supplement applications or functions performed by the system 100 for executing different steps involved in the process for measuring social awareness by the system 100. The plurality of modules, amongst other things, can include routines, programs, objects, components, and data structures, which performs particular tasks or implement particular abstract data types. The plurality of modules may also be used as signal processor(s), node machine(s), logic circuitries, and/or any other device or component that manipulates signals based on operational instructions. Further, the plurality of modules can be used by hardware, by computer-readable instructions executed by the one or more hardware processors 102, or by a combination thereof. The plurality of modules can include various sub-modules (not shown).

Further, the memory 104 may include a database 108 or repository. The memory 104 may comprise information pertaining to input(s)/output(s) of each step performed by the processor(s) 102 of the system 100 and methods of the present disclosure. In an embodiment, the database 108 may be external (not shown) to the system 100 and coupled via the I/O interface 106. The database may include data sources corresponding to video received from the device, human count, gaze angle and so on.

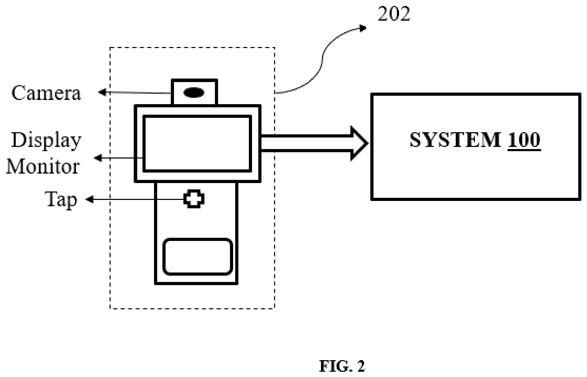

FIG. 2 illustrates device set up capturing sustainable actions of subjects gathered in a scene such as a social gathering event like conference, marriage and the like, using a camera connected to the device. This device is connected to the system for measuring social awareness of the crowd in the social gathering event based on an ignorance index calculated using the count of subjects attended the scene who have ignored a sustainable action like closing a running tap. The present disclosure uses the device 202, comprising an image capturing device, for example a camera, a display monitor, a speaker, a tap, and a pump. The image capturing device is a camera to capture the subjects and their actions during the social gathering event. The display monitor is a projector to display information such as any sustainable actions or any ignorant actions performed by subjects. Further the device includes a tap through which liquid such as water flows and a water collection and rotation component which includes a pump used to recycle the water flowing through the tap, in the device. The device is connected through wi-fi to the system 100 using Message Queuing Telemetry Transport (MQTT) protocol. The system 100 act as a server for processing the video collected from the camera.

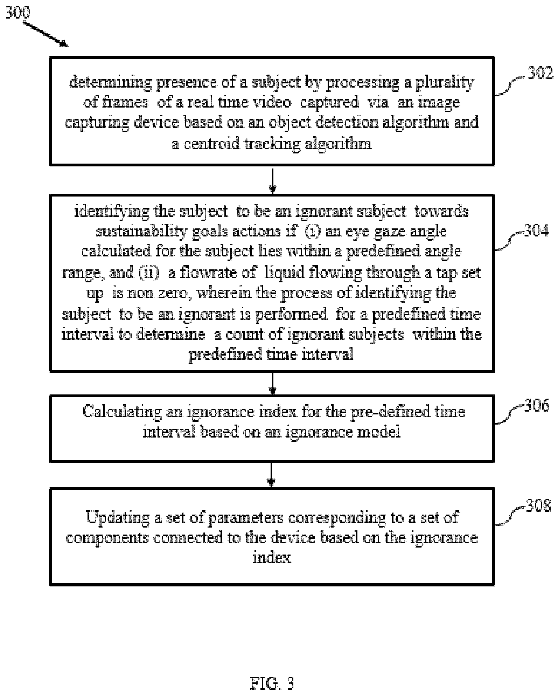

FIG.3 is an exemplary flow diagram illustrating a method for measuring social awareness based on ignorance index in accordance with some embodiments of the present disclosure. In an embodiment, the system 100 comprises one or more data storage devices or the memory 104 operatively coupled to the one or more hardware processor(s) 102 and is configured to store instructions for execution of steps of the method 300 by the processor(s) or one or more hardware processors 102. The steps of the method 300 of the present disclosure will now be explained with reference to the components or blocks of the system 100 as depicted in FIG. 1, the device 202 as depicted in FIG. 2 and the steps of flow diagram as depicted in FIG. 3. The method 300 may be described in the general context of computer executable instructions. Generally, computer executable instructions can include routines, programs, objects, components, data structures, procedures, modules, functions, etc., that perform particular functions or implement particular abstract data types. The method 300 may also be practiced in a distributed computing environment where functions are performed by remote processing devices that are linked through a communication network. The order in which the method 300 is described is not intended to be construed as a limitation, and any number of the described method blocks can be combined in any order to implement the method 300, or an alternative method. Furthermore, the method 300 can be implemented in any suitable hardware, software, firmware, or combination thereof.

Now referring to FIG. 3, at step 302 of the method 300, one or more hardware processors 102 are configured to determine presence of a subject by processing a plurality of frames of a real time video captured via an image capturing device based on an object detection algorithm and a centroid tracking algorithm. The real time video is captured by the image capturing device like a camera, using the data collection module. The camera is connected to the system 100 for measuring social awareness and the camera is deployed on the device 202 or deployed as a separate entity in the same line of sight of the device 202 capturing sustainable actions of subjects.

Further at step 304 of the method 300, one or more hardware processors 102 are configured to identify the subject to be an ignorant subject towards sustainable actions if (i) an eye gaze angle calculated for the subject lies within a predefined angle range, and (ii) a flowrate of liquid flowing through a tap set up is non zero. The process of identifying the subject to be an ignorant is performed for a predefined time interval to determine a count of ignorant subjects within the predefined time interval Based on the flow rate of liquid such as water through the tap of the device, the count of ignorant subjects is updated. If the flow rate has a non-zero value, the count of ignorant subjects is incremented by a value one. The flow rate of water is calculated using a flow rate sensor connected to the device. The flow rate sensor is placed inside the tap, to calculate the flow rate of water flowing through the tap. The count of ignorant subjects is updated at each frame of the plurality of frames. The set of steps for updating the count of ignorant subjects at a current frame using the ignorant subject count detection module is explained below. The set of subjects is detected in the current frame using an object detection model, for example YOLOv4. Here the objects to be detected are subjects. The current frame is passed through the object detection model which is trained to detect subjects in the frame.

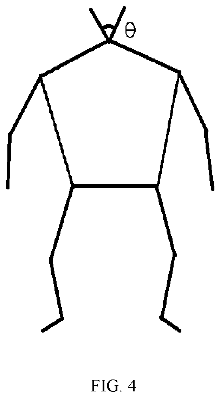

An eye gaze angle of each subject amongst the set of subjects is calculated. The eye gaze angle is calculated based on a set of pose points. The set of pose points are generated from each detected subject using a pose detection algorithm. Here initially the set of pose points comprising a set of eye pose points, and a neck pose point of the subject is generated using the pose detection algorithm. In the current disclosure a pose detection algorithm called AlphaPose is used. However, other examples of pose detection algorithms such as MediaPipe, MMpose can also be used. However, during experimentation AlphaPose gave the best balance between speed and accuracy. Also, AlphaPose supports multi person detection which is necessary for the disclosed method. Post generating the set of pose points, the eye gaze angle is calculated from the set of eye pose points and the neck pose point. The eye gaze angle calculation is done by considering the eye pose point and taking the angle θ with respect to the neck point as shown in FIG. 4. The eye gaze angle θ is the angle obtained by connecting the set of eye pose points to the neck pose point. FIG. 4 illustrates the eye gaze angle calculated from the set of eye pose points and the neck pose point of a subject in accordance with some embodiments of the present disclosure. The angle (θ) as shown in FIG. 4, which is the eye gaze angle is smaller if the subject is looking away from the camera and larger if the subject is looking towards the camera.

The count of ignorant subjects is updated by incrementing the count with a value of one, if the eye gaze angle is in between a pre-defined angle range. For example, the eye gaze angle can range from 45 degrees to 0 degrees when subjects gaze at the device. The eye gaze angle range is defined using experimentation. Only the subject with their gaze towards the device is considered i.e., in the pre-defined angle range and if the angle is in that range it is considered the gaze of the subject is towards the device but the subject has not closed the tap since the flow rate is non-zero. The subject is counted then and tracked using object tracking method applied on the frame so as not to count the same subject again until this subject goes out of frame. The object (subject) tracking algorithm used in the present disclosure is based on centroid tracking. The centroid of each subject detected in the frame is calculated. The tracking algorithm tracks the same object in the subsequent frames by analyzing the centroid of the objects in each frame. The centroid of each detected object is calculated for each frame. Then in the subsequent frames if new centroids are in a certain pre-defined radius as in the previous frame it is assumed to be the same object and is not recounted.

Next at step 306 of the method 300, one or more hardware processors 102 are configured to calculate an ignorance index for the pre-defined time interval based on an ignorance model. The ignorance model is based on a plurality of parameters comprising the count of ignorant subjects, a volume of the liquid flowing during the pre-defined time interval and a pre-defined beta coefficient. For example, the pre-defined time interval can be 10 minutes or 1 hour depending on the time the device is set up for. The ignorance index is calculated using equation (1) as given below,

$$II = \sigma \left( \frac{F(t) \times N(t)}{T} \right) \pm \beta \qquad (1)$$

II is the ignorance index which is a value in the range of 0 to 1 and lower the ignorance higher the value. The ignorance index is in the range of a value of zero and a value of one. A lower ignorance index indicates a lower ignorance of social awareness, which means the subjects have less social awareness and a higher ignorance index indicates a higher ignorance of social awareness. $F(t)$ is the volume of the water based on the given pre-defined time interval, which is determined from the flow rate of water in the pre-defined time interval. $N(t)$ is the count of ignorant subjects for the pre-defined time interval. T is the total time that the system run. $\beta$ is the pre-defined beta coefficient which adjust the ignorance index value based on the flow rate and the count of ignorant subjects. $\sigma$ is the sigmoid function. Beta coefficient is used to normalize the ignorance index value and is in between 0 and 1. For instance, there are scenarios where the ignorance index value goes beyond the range, and beta coefficient normalizes the ignorance index in the required range. Beta coefficient can vary based on the flow rate and the count of ignorant subjects. However, during experimentation, which is explained later, proper ignorance value was generated without the use of beta coefficient. The method disclosed considers a dynamic flow-based methodology, i.e., from the ignorance index model it is seen that the flow rate of water is proportional to the ignorance index. This means that if people are continuously ignoring closing the tap, it should not lead to large amount of resource wastage (water wastage). So, the method optimizes the flow of water in adjusting the flow rate values when the ignorance index reaches a maximum threshold. The flow rate is controlled using a pump connected to the device. When the ignorance index reaches the maximum threshold, the speed of the pump is controlled accordingly, so that flow rate of the liquid is adjusted.

At step 308 of the method 300, one or more hardware processors 102 are configured to update a set of parameters corresponding to a set of components connected to the device based on the ignorance index. The set of parameters is an indication of social awareness in subjects. The set of components connected to the device are the display monitor, the speaker, and the pump. The set of parameters are (i) LED light intensity in the display monitor, which is controlled by an LED intensity controller, (ii) volume of the speaker, which is controlled by a speaker volume controller, and (iii) speed of the pump which is controlled by a pump speed controller. The LED light intensity is updated inversely proportional to the ignorance index. The volume of the speaker is updated inversely proportional to the ignorance index. The speed of the pump is updated proportionally to the ignorance index. The pump speed controller adjusts the speed of the pump proportional to the ignorance index hence increasing the water level inside the water drain tank. When the water level cut off switch is on the pump ignores the pump speed controller speed change and remain at the last speed until reset. When the flow rate becomes zero the count of ignorant subjects updating is stopped, and the human count is reset to zero. The system provides a message to the display monitor with the count of ignorant subjects and water volume till now. The message stays for 10 seconds and goes back to idle animation.

EXPERIMENTAL RESULTS:

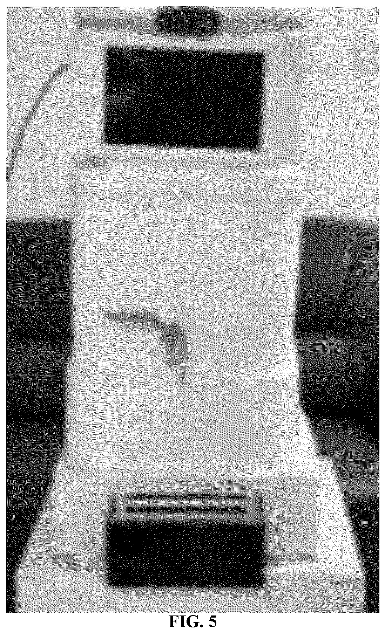

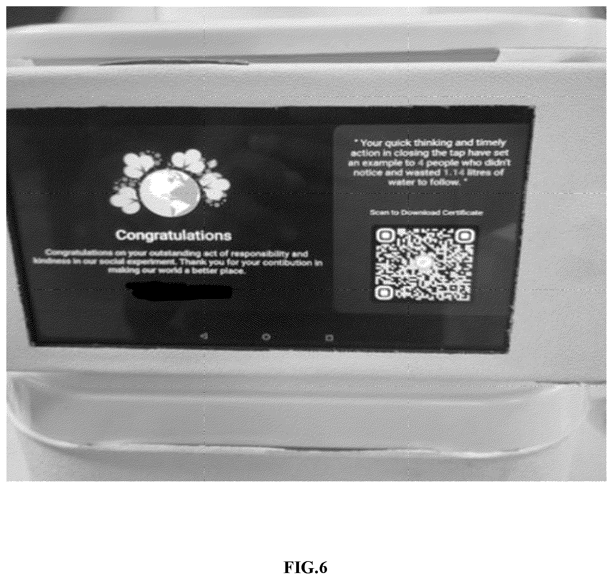

FIG.5 is an example image of the device capturing sustainable actions of subjects connected to the system for measuring social awareness based on ignorance index according to some embodiments of the present disclosure. The experiment was conducted at an art exhibition for 8 Hours, 2955 people passed by the device. Out of that 147 people closed the tap (approximately 5% of the total people). 270 liters of water was wasted. The device was placed in a corridor towards the main exhibits, so people passed by the setup frequently. FIG. 6 is an example image of a message displayed in the display monitor according to some embodiments of the present disclosure.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein relate to device designed to capture the human actions who care about sustainable earth. The disclosed method detects subjects in a social gathering event and calculates the eye gaze angle of the detected subjects. Based on the subject count and the eye gaze angle, the method classifies whether the subject is ignorant or non-ignorant towards sustainability. Also the disclosed method calculates an ignorance index for a pre-defined time interval using the subject count, wherein the ignorance index indicates the social awareness of the group people attending the social gathering.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (300) comprising:

   determining presence of a subject, via one or more hardware processors, by processing a plurality of frames of a real time video captured via an image capturing device based on an object detection algorithm and a centroid tracking algorithm (302);

   identifying the subject, via the one or more hardware processors, to be an ignorant subject towards sustainability actions if (i) an eye gaze angle calculated for the subject lies within a predefined angle range, and (ii) a flowrate of liquid flowing through a tap set up is non zero, wherein the process of identifying the subject to be an ignorant is performed for a predefined time interval to determine a count of ignorant subjects within the predefined time interval (304);

   calculating, via the one or more hardware processors, an ignorance index for the pre-defined time interval based on an ignorance model, wherein the model is based on a plurality of parameters comprising the count of the ignorant subjects, a volume of the liquid flowing during the pre-defined time interval and a pre-defined beta coefficient for normalizing the ignorance index (306); and

   updating, via the one or more hardware processors, a set of parameters corresponding to a set of components connected to the device based on the ignorance index, wherein the set of parameters is an indication of social awareness in subjects (308).

2. The processor implemented method as claimed in claim 1, wherein calculating the eye gaze angle of a subject comprises:

   generating, via the one or more hardware processors, the set of pose points comprising a set of eye pose points, and a neck pose point of the subject using the pose detection algorithm; and

   calculating the eye gaze angle, via the one or more hardware processors, based on the neck pose point and the set of eye pose points, wherein the eye gaze angle is the angle obtained by connecting the set of eye pose points to the neck pose point.

3. The processor implemented method as claimed in claim 1,

   wherein the ignorance model is mathematically represented as,

   $$II = \sigma\left(\frac{F(t) \times N(t)}{T}\right) \pm \beta$$

   where $II$ is the ignorance index, $F(t)$ is volume of the liquid flowing during the pre-defined time interval. $N(t)$ is the count of the ignorant subjects for the pre-defined time interval, T is the total time and $\beta$ is a pre-defined beta coefficient for normalizing the ignorance index; and

   wherein the ignorance index is in the range of a value of zero and a value of one, and wherein a lower ignorance index indicates a lower ignorance of social awareness, and a higher ignorance index indicates a higher ignorance of social awareness.

4. The processor implemented method as claimed in claim 1, wherein the set of components connected to the device comprises a display monitor, a speaker, and a pump, and wherein the set of parameters (i) LED light intensity in the display monitor are controlled by an LED intensity controller, (ii) volume of the speaker is controlled by a speaker volume controller, and (iii) speed of the pump is controlled by a pump speed controller.

5. The processor implemented method as claimed in claim 4, wherein

   the LED light intensity is updated inversely proportional to the ignorance index;
   the volume of the speaker is updated inversely proportional to the ignorance index; and
   the speed of the pump is updated proportionally to the ignorance index.

6. A system (100), comprising:

a memory (104) storing instructions;
one or more communication interfaces (106); and
one or more hardware processors (102) coupled to the memory (104) via the one or more communication interfaces (106), wherein the one or more hardware processors (102) are configured by the instructions to:

determine presence of a subject by processing a plurality of frames of a real time video captured via an image capturing device based on an object detection algorithm and a centroid tracking algorithm;
identify the subject to be an ignorant subject towards sustainability actions if (i) an eye gaze angle calculated for the subject lies within a predefined angle range, and (ii) a flowrate of liquid flowing through a tap set up is non zero, wherein the process of identifying the subject to be an ignorant is performed for a predefined time interval to determine a count of ignorant subjects within the predefined time interval;
calculate an ignorance index for the pre-defined time interval based on an ignorance model, wherein the model is based on a plurality of parameters comprising the count of the ignorant subjects, a volume of the liquid flowing during the pre-defined time interval and a pre-defined beta coefficient for normalizing the ignorance index; and
update a set of parameters corresponding to a set of components connected to the device based on the ignorance index, wherein the set of parameters helps is an indication of social awareness in subjects.

7. The system as claimed in claim 6, wherein calculating the eye gaze angle of a subject comprises:

generating the set of pose points comprising a set of eye pose points, and a neck pose point of the subject using the pose detection algorithm; and
calculating the eye gaze angle based on the neck pose point and the set of eye pose points, wherein the eye gaze angle is the angle obtained by connecting the set of eye pose points to the neck pose point.

8. The system as claimed in claim 6,

wherein the ignorance model is mathematically represented as,

$$II = \sigma\left(\frac{F(t) \times N(t)}{T}\right) \pm \beta$$

where $II$ is the ignorance index, $F(t)$ is volume of the liquid flowing during the pre-defined time interval. $N(t)$ is the count of the ignorant subjects for the pre-defined time interval, T is the total time and $\beta$ is a pre-defined beta coefficient for normalizing the ignorance index; and
wherein the ignorance index is in the range of a value of zero and a value of one, and wherein a lower ignorance index indicates a lower ignorance of social awareness, and a higher ignorance index indicates a higher ignorance of social awareness.

9. The system as claimed in claim 6, wherein the set of components connected to the device comprises a display monitor, a speaker, and a pump, and wherein the set of parameters (i) LED light intensity in the display monitor are controlled by an LED intensity controller, (ii) volume of the speaker is controlled by a speaker volume controller, and (iii) speed of the pump is controlled by a pump speed controller.

10. The system as claimed in claim 9, wherein

the LED light intensity is updated inversely proportional to the ignorance index;
the volume of the speaker is updated inversely proportional to the ignorance index; and
the speed of the pump is updated proportionally to the ignorance index.

11. One or more non-transitory machine-readable information storage mediums comprising one or more instructions which when executed by one or more hardware processors cause:
determining presence of a subject, via one or more hardware processors, by processing a plurality of frames of a real time video captured via an image capturing device based on an object detection algorithm and a centroid tracking algorithm;

identifying the subject to be an ignorant subject towards sustainability actions if (i) an eye gaze angle calculated for the subject lies within a predefined angle range, and (ii) a flowrate of liquid flowing through a tap set up is non zero, wherein the process of identifying the subject to be an ignorant is performed for a predefined time interval to determine a count of ignorant subjects within the predefined time interval;

calculating an ignorance index for the pre-defined time interval based on an ignorance model, wherein the model is based on a plurality of parameters comprising the count of the ignorant subjects, a volume of the liquid flowing during the pre-defined time interval and a pre-defined beta coefficient for normalizing the ignorance index; and updating a set of parameters corresponding to a set of components connected to the device based on the ignorance index, wherein the set of parameters is an indication of social awareness in subjects.

12. The one or more non-transitory machine-readable information storage mediums as claimed in claim 11, wherein calculating the eye gaze angle of a subject comprises:

generating the set of pose points comprising a set of eye pose points, and a neck pose point of the subject using the pose detection algorithm; and
calculating the eye gaze angle based on the neck pose point and the set of eye pose points, wherein the eye gaze angle is the angle obtained by connecting the set of eye pose points to the neck pose point.

13. The one or more non-transitory machine-readable information storage mediums as claimed in claim 11,

wherein the ignorance model is mathematically represented as,

$$II = \sigma\left(\frac{F(t) \times N(t)}{T}\right) \pm \beta$$

where II is the ignorance index, F(t) is volume of the liquid flowing during the pre-defined time interval. N(t) is the count of the ignorant subjects for the pre-defined time interval, T is the total time and $\beta$ is a pre-defined beta coefficient for normalizing the ignorance index; and
wherein the ignorance index is in the range of a value of zero and a value of one, and wherein a lower ignorance index indicates a lower ignorance of social awareness, and a higher ignorance index indicates a higher ignorance of social awareness.

14. The one or more non-transitory machine-readable information storage mediums as claimed in claim 11, wherein the set of components connected to the device comprises a display monitor, a speaker, and a pump, and wherein the set of parameters (i) LED light intensity in the display monitor are controlled by an LED intensity controller, (ii) volume of the speaker is controlled by a speaker volume controller, and (iii) speed of the pump is controlled by a pump speed controller.

15. The one or more non-transitory machine-readable information storage mediums as claimed in claim 14, wherein

the LED light intensity is updated inversely proportional to the ignorance index;
the volume of the speaker is updated inversely proportional to the ignorance index; and
the speed of the pump is updated proportionally to the ignorance index.

**SYSTEM 100**

**HARDWARE PROCESSOR(S) 102**

**MEMORY 104**

**DATABASE 108**

**I/O INTERFACE(S) 106**

**FIG. 1**

202

Camera

Display
Monitor

Tap

SYSTEM 100

**FIG. 2**

300

determining presence of a subject by processing a plurality
of frames of a real time video captured via an image
capturing device based on an object detection algorithm and
a centroid tracking algorithm

302

identifying the subject to be an ignorant subject towards
sustainability goals actions if (i) an eye gaze angle
calculated for the subject lies within a predefined angle
range, and (ii) a flowrate of liquid flowing through a tap set
up is non zero, wherein the process of identifying the
subject to be an ignorant is performed for a predefined time
interval to determine a count of ignorant subjects within the
predefined time interval

304

Calculating an ignorance index for the pre-defined time
interval based on an ignorance model

306

Updating a set of parameters corresponding to a set of
components connected to the device based on the ignorance
index

308

FIG. 3

FIG. 4

**FIG. 5**

**FIG.6**

| | Europäisches Patentamt<br>European Patent Office<br>Office européen des brevets | **EUROPEAN SEARCH REPORT** | **Application Number**<br>EP 25 20 3032 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/428276 A1 (TOJO HIROSHI [JP])<br>26 December 2024 (2024-12-26)<br>* abstract *<br>* paragraphs: [0001], [0069]-[0070],<br>[0073]-[0074], [0077]-[0079],<br>[0085]-[0087], [0089]-[0090] *<br>----- | 1-15 | INV.<br>G06V20/52<br>G06V40/18 |
| A | WO 2020/020022 A1 (LU FAN [CN])<br>30 January 2020 (2020-01-30)<br>* the whole document *<br>----- | 1-15 | |
| A | JP 2007 181070 A (SHUNKOSHA KK)<br>12 July 2007 (2007-07-12)<br>* the whole document *<br>----- | 1-15 | |
| | | | **TECHNICAL FIELDS SEARCHED (IPC)**<br><br>G06V |

The present search report has been drawn up for all claims

| Place of search | Date of completion of the search | Examiner |
|---|---|---|
| The Hague | 3 December 2025 | Sagrebin-Mitzel, M |

EPO FORM 1503 03.82 (P04C01)

## ANNEX TO THE EUROPEAN SEARCH REPORT
## ON EUROPEAN PATENT APPLICATION NO.

EP 25 20 3032

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2025

| Patent document cited in search report | Publication date | Patent family member(s) | Publication date |
|---|---|---|---|
| US 2024428276 A1 | 26-12-2024 | JP 2025001892 A<br>US 2024428276 A1 | 09-01-2025<br>26-12-2024 |
| WO 2020020022 A1 | 30-01-2020 | CN 110765828 A<br>WO 2020020022 A1 | 07-02-2020<br>30-01-2020 |
| JP 2007181070 A | 12-07-2007 | JP 4603974 B2<br>JP 2007181070 A | 22-12-2010<br>12-07-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202521001445